# EUROPEAN PATENT SPECIFICATION

(11) **EP 4 317 914 B1**
(45) Date of publication and mention of the grant of the patent: **02.12.2026**
(21) Application number: 21934790.3
(22) Date of filing: 29.03.2021
(51) Int. Cl.: G01C 21/20, G01C 21/00

(54) **MAP DATA STRUCTURE, STORAGE DEVICE, INFORMATION PROCESSING DEVICE, CONTROL METHOD, PROGRAM, AND STORAGE MEDIUM**
KARTENDATENSTRUKTUR, SPEICHERVORRICHTUNG, INFORMATIONSVERARBEITUNGSVORRICHTUNG, STEUERVERFAHREN, PROGRAMM UND SPEICHERMEDIUM
STRUCTURE DE DONNÉES DE CARTE, DISPOSITIF DE STOCKAGE, DISPOSITIF DE TRAITEMENT D'INFORMATIONS, PROCÉDÉ DE COMMANDE, PROGRAMME ET SUPPORT DE STOCKAGE

(43) Date of publication of application: 07.02.2024
(73) Proprietor: Pioneer Corporation, Tokyo 113-0021 (JP); Pioneer Smart Sensing Innovations Corporation, Tokyo 113-0021 (JP)
(72) Inventor: KODA, Takeshi, Kawagoe-shi, Saitama 350-8555 (JP); KATO, Masahiro, Kawagoe-shi, Saitama 350-8555 (JP); KATO, Masahiro, Kawagoe-shi, Saitama 350-8555 (JP); GOTODA, Akira, Kawagoe-shi, Saitama 350-8555 (JP); SHIRATORI, Kunio, Tokyo 113-0021 (JP)
(74) Representative: Viering, Jentschura & Partner mbB Patent- und Rechtsanwälte
(86) International application number: PCT/JP2021/013317
(87) International publication number: WO 2022/208617

(56) References cited:
- WO-A1-2016/189732
- CN-A- 109 490 906
- JP-A- 2001 066 984
- JP-A- 2006 170 920
- JP-A- 2012 226 675
- PEREIRA MARIA INES ET AL: "Detecting Docking-based Structures for Persistent ASVs using a Volumetric Neural Network", GLOBAL OCEANS 2020: SINGAPORE - U.S. GULF COAST, IEEE, 5 October 2020 (2020-10-05), pages 1 - 6, XP033896796, DOI: 10.1109/IEEECONF38699.2020.9389349
- SHAN YUNXIAO ET AL: "Lidar-Based Stable Navigable Region Detection for Unmanned Surface Vehicles", IEEE TRANSACTIONS ON INSTRUMENTATION AND MEASUREMENT, IEEE, USA, vol. 70, 5 February 2021 (2021-02-05), pages 1 - 13, XP011839013, ISSN: 0018-9456, [retrieved on 20210218], DOI: 10.1109/TIM.2021.3056643

## Description

### TECHNICAL FIELD

The present disclosure relates to data structure of map data and processing based on the map data.

### BACKGROUND

Conventionally, there is known a technique for estimating a self position of a moving body by matching between shape data of surrounding objects measured using a measuring device such as a laser scanner and map information in which the shape of the surrounding object is stored in advance. For example, Patent Literature 1 discloses an autonomous moving system configured to determine whether a detected object in voxels, which are obtained by dividing a space according to a predetermined pattern, is a stationary object or a moving object, and perform matching between measured data and the map data with respect to voxels determined to include a stationary object. Further, Patent Literature 2 discloses a scan matching method for performing self position estimation by matching between point cloud data outputted by a lidar and voxel data including a mean vector and a covariance matrix regarding a stationary object for each voxel. Furthermore, Patent Literature 3 discloses an autonomous shore reaching device configured to autonomously control a ship to get ashore, wherein the autonomous shore reaching device controls the posture of the ship so that a lidar can receive a light emitted by the lidar and reflected by an object in the vicinity of the shore to be reached. Patent Literature 4 discloses an onboard wave dynamic measuring device based on a laser radar.

### PRIOR ART DOCUMENTS

### PATENT LITERATURE

Patent Literature 1: WO2013/076829
Patent Literature 2: WO2018/221453
Patent Literature 3: JP2020-59403A
Patent Literature 4: CN109490906A

### SUMMARY

### PROBLEM TO BE SOLVED BY THE INVENTION

It is conceivable to estimate, at the time of autonomously getting ashore, the position and the posture of the own ship with respect to a floating pier by referring to map data in which the position of each floating object floating on the water surface such as a floating pier is recorded. In this case, when the tide level at the time of measurement of the floating object for generating the map data is different from the tide level at the time of reference to the map data, there is such an issue that an error occurs in the position of the floating object identified with reference to the map data.

The present disclosure has been made in order to solve the above issue, and it is an object of the present invention to provide a map data structure with which the position of a floating object can be suitably identified, and a storage device, an information processing device, a control method, a program, and a storage medium relating to map data with the map data structure.

### MEANS FOR SOLVING THE PROBLEM

One invention is a map data structure that is a data structure of map data to be referred to by an information processing device, including:
position information indicating a position of a structural object; and
attribution information indicating whether or not the structural object is a floating object on a water surface,
wherein, if the attribute information indicates that the structural object is a floating object on a water surface, the attribute information is used by the information processing device to identify the position of the structural object by using the position information as relative position information relative to a position of the water surface.

### BRIEF SUMMARY OF THE INVENTION

The invention is set out in the appended set of claims.

### BRIEF DESCRIPTION OF THE DRAWINGS

[FIG. 1] It is a schematic configuration diagram of a driving support system.
[FIG. 2] It is a block diagram showing an example of a hardware configuration of an information processing device.
[FIG. 3] It is a diagram showing a self position to be estimated by the self position estimation unit in the three dimensional Cartesian coordinate system.
[FIG. 4] It illustrates an example of a schematic data structure of voxel data.
[FIG. 5] FIGS. 5A and 5B each is a diagram showing a condition of the floating pier provided on the fixed wharf.
[FIG. 6] It is an example of a detailed data structure for voxel data.
[FIG. 7] It is an example of a functional block of the self position estimation unit.
[FIG. 8] It is an example of a flowchart showing a procedure of the self position estimation process.

### DETAILED DESCRIPTION OF PREFERRED EMBODIMENTS

According to a preferred embodiment of the present invention, there is provided a map data structure that is a data structure of map data to be referred to by an information processing device, including: position information indicating a position of a structural object; and attribution information indicating whether or not the structural object is a floating object on a water surface, wherein, if the attribute information indicates that the structural object is a floating object on a water surface, the attribute information is used by the information processing device to identify the position of the structural object by using the position information as relative position information relative to a position of the water surface. With such a data structure, the map data can suitably store position information regarding a floating object in such a manner that the information processing device referring to the map data can appropriately identify the position of the floating object floating on the water surface without depending on the variation in the tide level.

In one aspect of the map data structure, the position information indicates a relative position whose position in height direction is represented with respect to a height position of the water surface, if the attribute information indicates that the structural object is a floating object on a water surface, and the attribute information is used by the information processing device to identify an absolute position of the structural object in the height direction obtained by adding an estimated absolute height position of the water surface to the relative position indicated by the position information. With the data structure according to this aspect, the map data can suitably store position information regarding a floating object in such a manner that the information processing device referring to the map data can appropriately identify the absolute position of the floating object.

In another aspect of the map data structure, the map data is voxel data representing the position of the structural object with respect to each voxel that is a unit region, and the position information and the attribute information are provided for each voxel. In this way, the map data structure can be suitably applied to voxel data. In some embodiments, the position information indicates at least one of a voxel coordinate value which indicates a representative position of the each voxel and a mean vector of measured positions of the structural object for the each voxel.

In still another aspect of the map data structure, if the attribute information indicates that the structural object is a floating object on a water surface, the attribute information is used by the information processing device to estimate a self position of the information processing device based on a matching result between an absolute position of the structural object, for each voxel, obtained by correcting the position information as the relative position information and an absolute position of the structural object based on measurement data which the information processing device obtains from a measurement device. With the data structure according to this aspect, the map data can cause the information processing device to estimate the self position when the information processing device estimates the self position based on measurement data of structural objects including a floating object obtained from a measurement device.

According to another preferred embodiment of the present invention, the storage device stores map data with the above-mentioned data structure. In this case, the storage device can cause the information processing device which refers to map data stored by the storage device to appropriately identify the position of the floating object floating on the water surface without depending on the variation in the tide level.

According to still another preferred embodiment of the present invention, there is provided an information processing device including: a map data reference unit configured to refer to map data with the above-mentioned data structure; a position identification unit configured, if attribute information corresponding to position information of a structural object referred to in the map data indicates that the structural object is a floating object, to identify the position of the structural object by using the position information as relative position information relative to the position of the water surface. According to this aspect, the information processing device can accurately identify the position of a floating object with reference to the map data.

In one aspect of the information processing device, the information processing device further includes: a measurement data acquisition unit configured to acquire measurement data regarding the structural object measured by a measurement device; and a self position estimation unit configured to estimate a self position based on a matching result between the measurement data and the map data. According to this aspect, the information processing device can suitably estimate the self position using a floating object as a reference with reference to the map data.

According to still another preferred embodiment of the present invention, there is provided a control method executed by the information processing device, the control method including: referring to map data with the data structure according to any one of claims 1 to 5; and if attribute information corresponding to position information of a structural object referred to in the map data indicates that the structural object is a floating object, identifying the position of the structural object by using the position information as relative position information relative to the position of the water surface. By executing this control method, the information processing device can accurately identify the position of a floating object with reference to the map data.

According to still another preferred embodiment of the present invention, there is provided a program causing a computer to: refer to map data with the data structure according to any one of claims 1 to 5; and if attribute information corresponding to position information of a structural object referred to in the map data indicates that the structural object is a floating object, identify the position of the structural object by using the position information as relative position information relative to the position of the water surface. By executing the program, the computer can accurately identify the position of a floating object with reference to the map data. In some embodiments, the program is stored in a storage medium.

### EMBODIMENTS

Hereinafter, preferred embodiments of the present invention are described below with reference to drawings. It is noted that a character with "^" or "-" on its top is expressed in this specification as "A^" or "A⁻" (where "A" is a character) for convenience.

### (1) Overview of Driving Support System

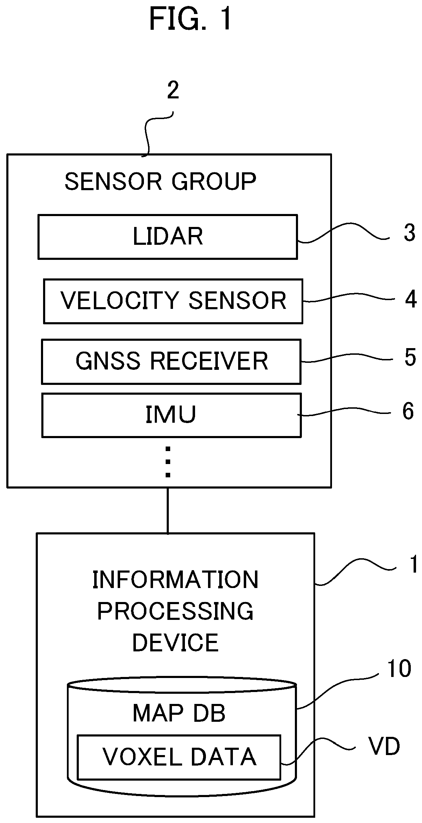

FIG. 1 is a schematic configuration of a driving support system according to the present embodiment. The driving support system increases an information processing device 1 which moves together with a ship which is a moving body, and a sensor group 2 mounted on the ship. Hereafter, the ship which moves together with the information processing device 1 is also referred to as a "target ship".

The information processing device 1 is electrically connected to the sensor group 2 and estimates the position (also referred to as "self position") of the target ship in which the information processing device 1 is provided, based on the outputs from various sensors included in the sensor group 2. Then, the information processing device 1 performs driving support such as autonomous driving control of the target ship on the basis of the estimation result of the self position. The term "driving support" herein includes assistance to get ashore such as autonomous docking. Here, the term "getting ashore" or "docking" includes not only setting the target ship side by side with a pier but also setting the target ship side by side with any other structural body such as a landing bridge. The information processing device 1 may be a navigation device provided in the target ship or an electronic control device built in the target ship.

The information processing device 1 stores a map database (DB: DataBase) 10 including voxel data "VD". The voxel data VD is data in which position data of a stationary object (structural object) is recorded for each voxel, wherein a voxel indicates a cube (regular grid) that functions as the smallest unit of three dimensional space. The voxel data VD contains data representing measured point cloud data regarding a stationary object by using the normal distribution for each voxel. As will be described later, the voxel data VD is used for scan matching using NDT (Normal Distributions Transform). For example, the information processing device 1 performs estimation of the position on the plane, the height position, the yaw angle, the pitch angle, and the roll angle of the target ship by NDT scanning matching. Unless otherwise indicated, the self position shall include posture angle(s) of the target ship such as the yaw angle of the target ship.

The sensor group 2 includes various external and internal sensors provided on the target ship. In this example, the sensor group 2 includes a lidar (LiDAR: Light Detection and Ranging, or Laser Illuminated Detection And Ranging) 3, a velocity sensor 4 configured to detect the velocity of the target ship, a GNSS (Global Navigation Satellite System) receiver 5, and an inertial measurement unit (IMU) 6 configured to measure the acceleration and angular velocity of the target ship in the three axial directions.

The lidar 3 emits a pulse laser while changing the angle within a predetermined angle range in the horizontal and vertical directions and thereby discretely measures the distance to external object(s) and generates three dimensional point cloud data indicative of the position of the external objects. In this case, the lidar 3 is equipped with a radiation unit for radiating a laser beam while changing the irradiation direction, a light receiving unit for receiving the reflected light (scattered light) of the radiated laser beam, and an output unit for outputting data based on the received light signal outputted by the light receiving unit. Each measurement point data for each irradiation direction of the pulsed laser is generated based on the irradiation direction corresponding to the laser beam received by the light receiving unit and the response delay time of the laser beam which is identified by the received light signal described above. In general, the accuracy of the distance measurement value of the lidar increases with decreasing distance to a target object of measurement while the accuracy decreases with increasing distance to the target object. The lidar 3 is an example of the "measurement device" in the present invention. The velocity sensor 4 may be, for example, a velocimeter based on Doppler effect, or a velocimeter based on GNSS. Furthermore, the velocity sensor 4 may be a velocimeter based on the variation in distance information measured by the lidar 3.

### (2) Configuration of Information Processing Device

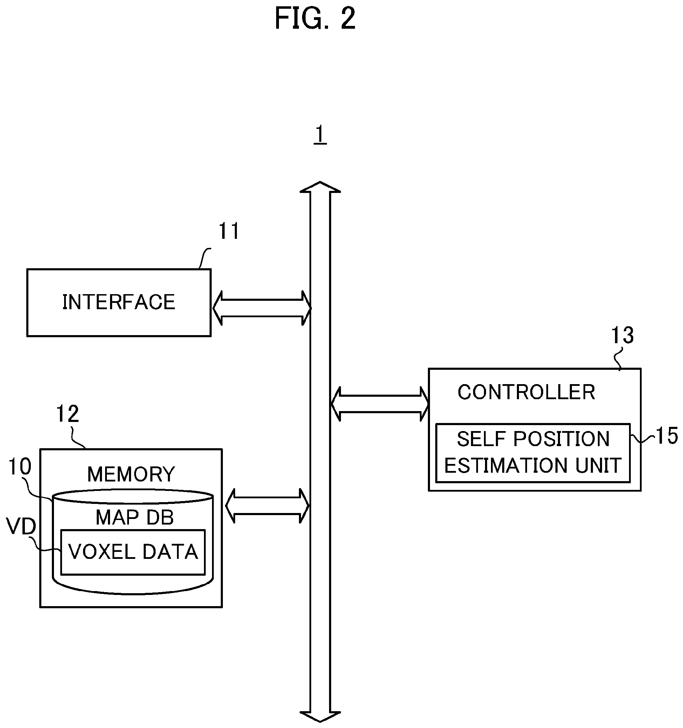

FIG. 2 is a block diagram illustrating an example of a hardware configuration of the information processing device 1. The information processing device 1 mainly includes an interface 11, a memory 12, and a controller 13. Each of these elements is connected to each other through a bus line.

The interface 11 performs the interface operation related to the transfer of data between the information processing device 1 and an external device. In the present embodiment, the interface 11 acquires and supplies output data from each sensor of the sensor group 2 such as the lidar 3, the velocity sensor 4, the GNSS receiver 5, and the IMU 6 to the controllers 13. For example, the interface 11 also supplies signals relating to the control of the target ship generated by the controller 13 to each component of the target ship to control the operation of the target ship. For example, a target ship includes a driving source such as an engine or an electric motor, a screw for generating a propulsive force in the traveling direction based on the driving force from the driving source, a thruster for generating a lateral propulsive force based on the driving force from the driving source, and a rudder which is a mechanism for controlling the traveling direction of the ship. Then, during an autonomous driving operation such as autonomous docking, the interface 11 supplies a control signal generated by the controller 13 to each of these components. In the case where an electronic control device is provided in the target ship, the interface 11 supplies a control signal generated by the controller 13 to the electronic control device. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, and a sound output device.

The memory 12 is configured by various volatile and non-volatile memories such as a RAM (Random Access Memory), a ROM (Read Only Memory), a hard disk drive, and a flash memory. The memory 12 stores a program for the controller 13 to perform a predetermined process. The program executed by the controller 13 may be stored in a storage medium other than the memory 12.

The memory 12 also stores the map DB 10 including the voxel data VD. The map DB 10 include not only the voxel data VD but also, for example, information regarding the docking place (such as a wharf and a pier), information regarding waterways in which ships can move, and the like. The map DB 10 may be stored in an external storage device outside the information processing device 1 such as a hard disk connected to the information processing device 1 through the interface 11. The storage device may be a server device that communicates with the information processing device 1. Further, the storage device may be configured by a plurality of devices. The map DB 10 may also be updated periodically or at any required timing. In this case, for example, the controller 13 receives partial map information regarding the area to which the self position belongs from a server device that manages the map information via the interface 11, and reflects it in the map DB 10.

In addition to the map DB 10, the memory 12 stores information required for processing performed by the information processing device 1 in the present embodiment. For example, the memory 12 stores information to be used for setting the down-sampling size of the down-sampling on the point cloud data obtained in one cycle scanning by the lidar 3.

The controller 13 includes one or more processors, such as a CPU (Central Processing Unit), a GPU (Graphics Processing Unit), and a TPU (Tensor Processing Unit), and controls the entire information processing device 1. In this case, the controller 13 performs processing related to the self position estimation and the driving support or the like by executing a program stored in the memory 12 or the like.

The controller 13 functionally includes a self position estimation unit 15. Then, the controller 13 functions as the "map data reference unit", "position identification unit", "self position estimation unit", and a computer or the like for executing the program.

The self position estimation unit 15 estimates the self position by performing NDT-based scan matching (NDT scan matching) on the basis of the point cloud data outputted from the lidar 3 and the voxel data VD corresponding to the voxels to which the point cloud data belongs. Here, the point cloud data to be processed by the self position estimation unit 15 may be point cloud data generated by the lidar 3 or may be point cloud data after the down-sampling of the point cloud data.

### (3) NDT Scan Matching

Next, the position estimation based on NDT scan matching executed by the self position estimation unit 15 will be described.

### (3-1) Self Position

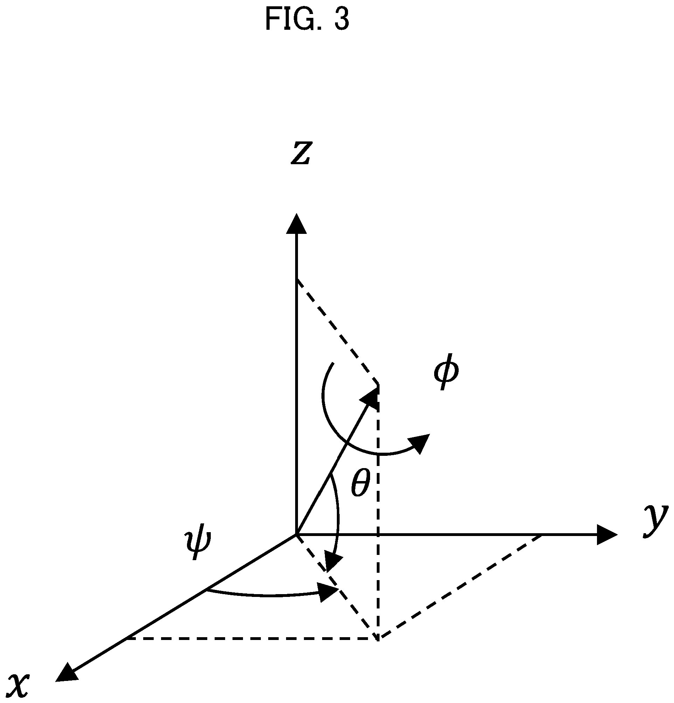

FIG. 3 is a diagram in which a self position to be estimated by a self position estimation unit 15 is represented by three dimensional Cartesian coordinate system. As shown in FIG. 3, the self position on the plane defined by the three-dimensional Cartesian coordinates xyz is represented by the coordinates "(x, y, z)", the roll angle "φ", the pitch angle "θ", and the yaw angle (azimuth) "ψ" of the target ship. Here, the roll angle φ is defined as the rotation angle around the traveling direction of the target ship, the pitch angle θ is defined as the elevation angle of the traveling direction of the target ship with respect to the x-y plane, and the yaw angle ψ is defined as the angle formed by the traveling direction of the target ship and the x-axis. The coordinates (x, y, z) is absolute coordinates (also referred to as "world coordinates") which uniquely indicates a position in the driving support system, and examples of the coordinates include a position identified by a combination of latitude, longitude, and altitude, a position based on UTM (Universal Transverse Mercator) coordinate system, and a position obtained by setting a predetermined point as the origin. Then, the self position estimation unit 15 performs self position estimation using x, y, z, φ, θ, and ψ as the estimation parameters.

### (3-2) Data Structure of Voxel Data

Next, the data structure of the voxel data VD to be used for NDT scan matching will be described. The voxel data VD contains data which represents by normal distribution the measured point cloud data of stationary structure(s) with respect to each voxel.

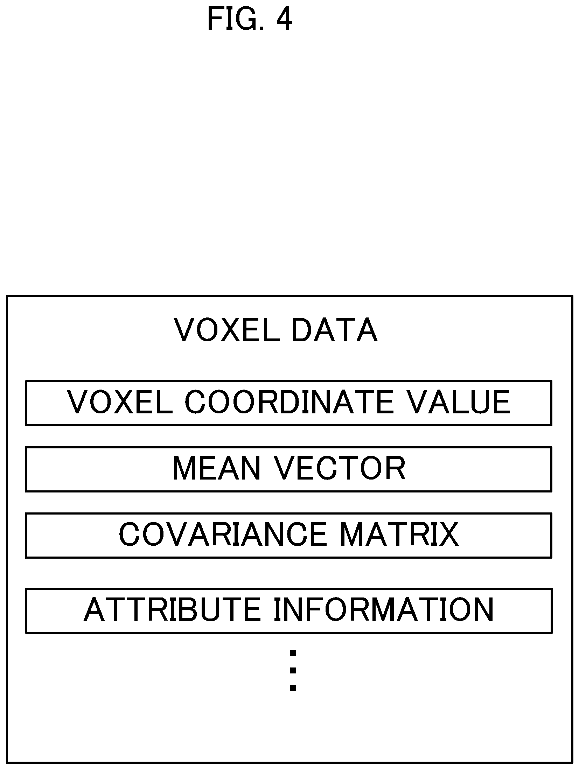

FIG. 4 shows an exemplary schematic data structure of the voxel data VD. The voxel data VD includes parameter information, which represents the point cloud data per voxel by normal distribution, and attribute information. In this embodiment, as shown in FIG. 4, it includes the voxel ID, the voxel coordinate value, the mean vector, the covariance matrix, and attribute information.

The "voxel coordinate value" indicates the absolute three-dimensional coordinate value of the representative position, such as the center position, of each voxel. Incidentally, each voxel is a cube obtained by dividing the space into a lattice shape and since the shape and size thereof are determined in advance, it is possible to identify the space of each voxel by the voxel coordinate value. The voxel coordinate value may be used as voxel ID. Further, in the present embodiment, when the attribute information to be described later indicates that it is a floating object floating on the water surface, the z coordinate value indicating the position in the height direction is a relative coordinate value (also referred to as "water surface reference coordinate value") with reference to the water surface position. The "voxel coordinate value" is an example of the "position information indicating a position of a structural object" in the present invention.

The "mean vector" and the "covariance matrix" show the mean vector and the covariance matrix corresponding to the parameters when the point cloud in each voxel is expressed by a normal distribution. The mean vector may be a mean vector in the each voxel represented in the local coordinate system, or may be a mean vector in the world coordinate system. If the attribute information indicates that it is a floating object floating on the water surface, the z coordinate value of the "mean vector" is a water surface reference coordinate value in the same way as the "voxel coordinate value", even in such a case that the "mean vector" is represented in the world coordinate system. In this case, the "mean vector" is an example of "position information indicating the position of the structural object" in the present invention.

The "attribute information" is information representing the attribute of the each voxel. In this example, it indicates, at least, whether or not the data in the each voxel represents a floating object floating on the water surface such as a floating pier. If the attribute information indicates that it is a floating object, the z coordinate value of the corresponding "voxel coordinate value" indicates a water surface reference coordinate value. If the attribute information indicates that it is not a floating object, the z coordinate value of the corresponding "voxel coordinate value" indicates a coordinate value (also referred to as "absolute coordinate value") in the world coordinate system.

The "attribute information" is suitably used in the process in which the information processing device 1 identifies the absolute height position of the each voxel in NDT scan matching. Specifically, if the "attribute information" indicates it being a floating object, the information processing device 1 which refers to the voxel data VD recognizes the absolute coordinate value (which is equal to the z coordinate value of the water surface position plus the z coordinate value of the "voxel coordinate value") of the each voxel based on: the water surface reference coordinate value which is the z coordinate value of the "voxel coordinate value"; and the z coordinate value of the water surface position in the world coordinate system. Similarly, if the "attribute information" indicates it being a floating object, the information processing device 1 converts the z coordinate value of the mean vector of the each voxel into the absolute coordinate value (which is equal to the z coordinate value of the water surface position plus the z coordinate value of the "mean vector"), based on the z coordinate value of the water surface position in the world coordinate system.

Here, a description will be given of the effect by providing the "attribute information" in the voxel data VD.

In autonomously getting ashore, it is possible to suitably control the docking by estimating the position and posture of the target ship relative to a reaching pier by NDT matching requires the matching between the voxel data VD and the point cloud data outputted by the lidar 3. However, when a floating object such as a floating pier floating on the water surface are computerized as voxel data VD, there is a problem that generated height information regarding the floating object varies relatively to fixed objects depending on the tide level at the time of the data measurement.

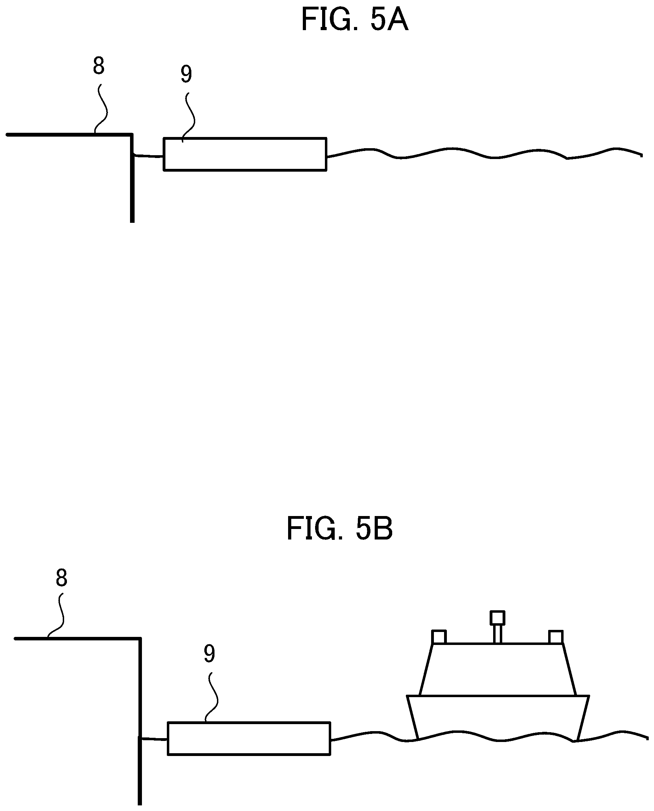

FIG. 5A is a diagram illustrating a state of a floating pier 9 provided at a fixed wharf 8 in data measurement for generating the voxel data VD, and FIG. 5B is a diagram illustrating a state of the floating pier 9 provided at the fixed wharf 8 in NDT scan matching in which the voxel data VD is referred to. As shown in FIG. 5A and FIG. 5B, the tide level in the NDT scan matching in which the voxel data VD is referred to is lower than the tide level in the data measurement for generating the voxel data VD. Consequently, the absolute position of the floating pier 9 floating on the water surface in the height direction in the NDT scan matching is different from the absolute position in the height direction in the data measurement for generating the voxel data VD. Therefore, if the NDT scan matching is performed in the state shown in FIG. 5B, the height information of the fixed wharf 8 that is a fixed nearby object does not match the height information of the floating pier 9 in the voxel data VD, which leads to the deterioration of the accuracy of the self position estimation.

In view of the above, the voxel data VD according to the present embodiment includes attribute information indicating whether or not data in a voxel is regarding a floating object floating on the water surface such as a floating pier. Accordingly, when performing the NDT scan matching by referring to the voxel data VD, the information processing device 1 can appropriately set the z coordinate value of the voxel corresponding to the floating object with respect to the water surface position and perform the self position estimation with high accuracy.

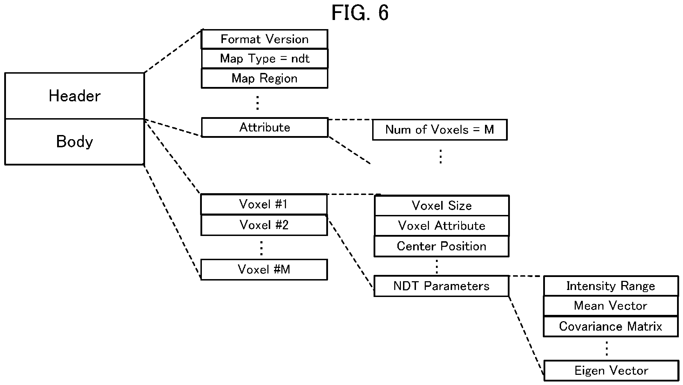

FIG. 6 shows an exemplary detailed data structure of the voxel data VD. As shown in FIG. 6, the voxel data VD includes an item "Header" for storing the header information and an item "Body" for storing the body information.

The item "Header" includes, as first sub-items, "Format Version" indicating the version of the voxel data VD, "Map Type" indicating the type of the map (set here to "ndt" indicating an NDT map), "Map Region" indicating a target area of computerization as the voxel data VD, and "Attribute" indicating the attribute of the voxel data VD. The first sub-item "Attribute" includes at least second sub-items "Num of Voxels" (here, "M") indicating the number of voxels provided with data.

The item "Body" includes first sub-items "Voxel #1" to "Voxel #M" each of which stores data for a corresponding voxel (here, the first voxel to the Mₜₕ voxel). In addition, each of the first sub-items "Voxel #1" to "Voxel #M" at least includes, as second sub-items, "Voxel Size" indicating the size of the corresponding voxel, "Voxel Attribute" storing the attribute information regarding the corresponding voxel, "Center Position" storing the coordinate value of the absolute center position of the corresponding voxel, and "NDT Parameters" storing the parameters for the corresponding voxel. In addition, the second sub-item "NDT Parameters" at least includes, as third sub-items, "Intensity Range" indicating the value range of the reflection intensity, "Mean Vector" storing the mean vector, "Covariance Matrix" storing the covariance matrix, and "Eigen Vector" storing the eigenvector.

Here, "Voxel Attribute" stores information corresponding to "attribute information" in FIG. 5. In this case, for example, "Voxel Attribute" may store binary data which indicates "1" in a case where the corresponding voxel is a floating object and which indicates "0" in other cases. In another embodiment, "Voxel Attribute" may store identification information (e.g., "Float") representing that the corresponding voxel is a floating object if the corresponding voxel is a floating object.

Instead of storing the information corresponding to "attribute information" in FIG. 5 as the attribute data ("Voxel Attribute" in the example of FIG. 6) of each voxel, a field indicating information regarding a convex hull area in which a floating object exists may be provided in the header section ("Header" in FIG. 6). In this case, the convex hull region is specified by a point sequence of coordinate values, for example. In that case, the information processing device 1 uses the z coordinate values, in the map data (not limited to voxel data), of the convex hull area as the water surface reference coordinate values, if the convex hull area is specified as a floating object area. Even when such a data structure is used in the map data, the same effect as the case of using the data structure shown in FIG. 6 is obtained.

Further, "Center Position" stores information corresponding to "voxel coordinate value" in FIG. 5. In this case, if "Voxel Attribute" indicates that it is a floating object, the z coordinate value indicated by the corresponding "Center Position" indicates a water surface reference coordinate value. In contrast, if "Voxel Attribute" indicates that it is not a floating object, the z coordinate value indicated by the corresponding "Center Position" indicates an absolute coordinate value. In addition, "Mean Vector" and "Covariance Matrix" respectively store information corresponding to "mean vector" and "covariance matrix" in FIG. 5. It is noted that, if "Mean Vector" is to store the mean vector in the world coordinate system, the z coordinate value of "Mean Vector" indicates a water surface reference coordinate value or an absolute coordinate value, in the same way as "Center Position". Specifically, the z coordinate value of "Mean Vector" indicates a water surface reference coordinate value when "Voxel Attribute" indicates that it is a floating object. In contrast, the z coordinate value of "Mean Vector" indicates an absolute coordinate value when "Voxel Attribute" indicates that it is not a floating object.

### (3-3) Outline of NDT Scan Matching

Next, the outline of NDT scan matching using voxel data VD will be described.

In the NDT scan matching assuming a ship as the target, the following estimated parameters which includes the displacement in the horizontal plane (here, x-y coordinates) and the orientation of the ship as elements. $P = {\left[{t}_{x}, {t}_{y}, {t}_{z}, {t}_{φ}, {t}_{θ}, {t}_{ψ}\right]}^{T}$

Here, "tₓ" is the displacement in the x direction, "t_{y}" is the displacement in the y direction, "t_{z}" is the displacement in the z direction, "t_{φ}" is the roll angle, "t_{θ}" is the pitch angle, "t_{ψ}" is the yaw angle.

Further, the coordinates of the point cloud data outputted by the lidar 3 are expressed by the following equation, wherein "j" indicates an index of each measurement point which constitutes the point cloud data. ${X}_{L} \left(j\right) = {\left[{x}_{n}\left(j\right), {y}_{n}\left(j\right), {z}_{n}\left(j\right)\right]}^{T}$

Then, the mean value "L' ₙ" of X_{L} (j) for a voxel "n" (n = 1 to M) are expressed by the following equation (1).
[Formula 1] ${L}_{n}^{′} = \left[\begin{matrix}{L}_{x}^{′} \\ {L}_{y}^{′} \\ {L}_{z}^{′}\end{matrix}\right] = \frac{1}{N} {\sum }_{j = 1}^{N} {X}_{L} \left(j\right)$ (1)

It is herein assumed that the voxel n includes N measurement points. Then, coordinate transformation based on a known coordinate transformation process is applied to the mean L' ₙ using the estimation parameters P described above. Hereinafter, the coordinates after the coordinate transformation is denoted by "Lₙ".

Then, the self position estimation unit 15 extracts the voxel data VD corresponding to the point cloud data after the coordinate transformation into the absolute coordinate system (also referred to as "world coordinate system") which is the same coordinate system as the coordinate system used in the map DB 10. Here, the mean vector of the voxel n according to the extracted voxel data VD is denoted by "µₙ", and the covariance matrix of the voxel n according to the extracted voxel data VD is denoted by "Vₙ". It is noted that, if the voxel n is associated with the attribute information indicating that the voxel n is a floating object, the self position estimation unit 15 determines that the z coordinate value of the voxel n according to the voxel data VD represents a water surface reference coordinate value, and adds the z coordinate value of the water surface position in the world coordinate system to the z coordinate value of the mean vector µₙ of the voxel n according to the voxel data VD.

The self position estimation unit 15 calculates the value (also referred to as "individual evaluation function value") "Eₙ" of an evaluation function of voxel n using the mean vector µₙ and the covariance matrix Vₙ. In this case, the self position estimation unit 15 calculates the individual evaluation function value Eₙ of the voxel n based on the following equation (2).
[Formula 2] ${E}_{n} = exp \left\{-\frac{1}{2}{\left({L}_{n}-{μ}_{n}\right)}^{T}{{V}_{n}}^{- 1}\left({L}_{n}-{μ}_{n}\right)\right\}$ (2)

Then, the self position estimation unit 15 calculates an overall evaluation function value (also referred to as "score value") "E (k)" for all voxels to be matched, as shown by the following equation (3). The score value E serves as an index value of the goodness of fit of the matching.
[Formula 3] $E \left(k\right) = {\sum }_{n = 1}^{M} {E}_{n} = {E}_{1} + {E}_{2} + ⋯ + {E}_{M}$ (3)

Thereafter, the self position estimation unit 15 calculates the estimated parameters P at which the score value E (k) is maximized, by an arbitrary root finding algorithm such as Newton method. Then, the self position estimation unit 15 obtains the self position (also referred to as the "NDT position") " X_{NDT} (k)" based on the NDT scan matching by applying the estimated parameters P to the dead reckoning position (also referred to as "DR position") at the time k. Here, DR position X_{DR} (k) corresponds to a tentative self position prior to the calculation of the NDT position X _{NDT} (k), and is also referred to as the predicted self position "X⁻ (k)". In this instance, the NDT position X _{NDT} (k) is expressed by the following equation (4).
[Formula 4] ${X}_{NDT} \left(k\right) = \overline{X} \left(k\right) + P$ (4)

Then, the self position estimation unit 15 uses the NDT position X _{NDT} (k) as the finally estimated self position (also referred to as "estimated self position") "X^ (k)" at the present clock time k.

### (3-4) Functional Blocks

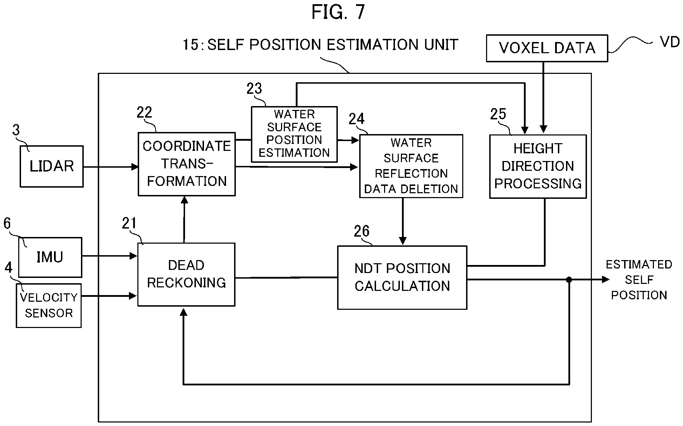

FIG. 7 is an example of a functional block of the self position estimation unit 15. As shown in FIG. 7, the self position estimation unit 15 includes a dead reckoning block 21, a coordinate transformation block 22, a water surface position estimation block 23, a water surface reflection data deletion block 24, a height direction processing block 25, and an NDT position calculation block 26.

The dead reckoning block 21 calculates the DR position on the basis of a signal outputted by the sensor group 2. Specifically, the dead reckoning block 21 uses the moving velocity and the angular velocity of the target ship based on the output from the velocity sensor 4 and IMU 6 or the like to determine the moving distance and the azimuth orientation change from the previous time. The DR position calculation block 21 calculates the DR position X_{DR} (k) at the time k obtained by adding the movement distance and the azimuth orientation change to the estimated own vehicle position X^ (k-1) at the time k-1 which is the previous clock time preceding to the current clock time k. This DR position X_{DR} (k) is the own vehicle position calculated at the time k based on dead reconning, and corresponds to the predicted own vehicle position X⁻ (k). The DR position X_{DR} (k) is the self position calculated at the time k based on dead reconning, and corresponds to the predicted self position X⁻ (k). It is noted that when the estimated self position X^ at the time k - 1 is not obtained because of it being immediately after the start of the self position estimation, the dead reckoning block 21 determines the DR position X_{DR} (k), based on the signal outputted by GNSS receiver 5, for example.

The coordinate transformation block 23 transforms the point cloud data based on the output from the lidar 3 into data in the world coordinate system that is the same coordinate system as the map DB 10. In this case, for example, based on the predicted own vehicle position outputted by the DR position calculation block 21 at the time k, the coordinate transformation block 22 performs coordinate transformation of the point cloud data at the time k. It is noted that the process of transforming the point cloud data in the lidar coordinate system with respect to the lidar installed in the vehicle to the vehicle coordinate system, and the process of transforming the vehicle coordinate system to the world coordinate system are disclosed in the International Publication WO2019/188745 and the like, for example.

The water surface position estimation block 23 estimates the height position of the water surface. For example, the water surface position estimation block 23 extracts measurement data (also referred to as "water surface position data") regarding the water surface position from the point cloud data outputted by the coordinate transformation block 22 and estimates the height position of the water surface based on the extracted water surface position data. In this case, first, from among the point cloud data acquired in such a condition that the target ship is apart from the shore more than a first predetermined distance, the water surface position estimation block 23 extracts the data indicating the position within a second predetermined distance (that is shorter than the first predetermined distance described above) from the position of the target ship, as water surface position data. Next, the water surface position estimation block 23 estimates the z coordinate value of the water surface position in the world coordinate system to be the average value of the positions (z coordinate values) in the z direction indicated by the measurement point data included in the extracted water surface position data.

Instead of estimating the water surface position based on the point cloud data, the water surface position estimation block 23 may acquire information regarding the height of the water surface position from a server device that provides information regarding the absolute height of the water surface position, and specify, based on the acquired information, the absolute z coordinate value of the water surface position. For example, by acquiring tide level information provided by a meteorological agency, it becomes possible to grasp the height position of the water surface.

The water surface reflection data deletion block 24 determines the water surface reflection data and deletes the water surface reflection data from the point cloud data, wherein the water surface reflection data is selected from the point cloud data supplied from the coordinate transformation block 22 and the water surface reflection data is data indicative of a position (i.e., position whose z coordinate value is equal to or smaller) equal to or lower than the height position of the water surface estimated by the water surface position estimation block 23. In some embodiments, the water surface reflection data deletion block 24 also regards the water surface position data extracted by the water surface position estimation block 23 as water surface reflection data to delete the water surface position data from the point cloud data to be supplied to the NDT position calculation block 26.

The height direction processing block 25 performs processing relating to the height direction position of each voxel regarding the voxel data VD to be used in the NDT scan matching performed by the NDT position calculation block 26. Specifically, when the "attribute information" in FIG. 4 (or "Voxel Attribute" in FIG. 6) indicates that the voxel belongs to a floating object, the water surface reflection data deletion block 24 determines that the z coordinate value of the voxel is represented by the water surface reference coordinate value and adds the z coordinate value of the water surface position in the world coordinate system estimated by the water surface position estimation block 23 to the z coordinate value. For example, for a voxel which belongs to a floating object, the height direction processing block 25 corrects the z coordinate value of the mean vector µₙ based on the height position of the water surface, and supplies the corrected mean vector µₙ to the NDT position calculation block 26.

The NDT position calculation block 26 calculates the NDT position based on the point cloud data after the deletion of the water surface reflection data, which is supplied from the water surface reflection data deletion block 24. In this instance, the NDT position calculation block 26 performs matching between the point cloud data in the world coordinate system supplied from the water surface reflection data deletion block 24 and the voxel data VD represented in the world coordinate system to associate the point cloud data with matched voxels. In this instance, the z coordinate value of the voxel data VD (the z coordinate value of the mean vector µₙ in the expression (2)) is converted from the water surface reference coordinate value to the absolute coordinate value by the height direction processing block 25 based on the water surface height position. Then, the NDT position calculation block 26 calculates the individual evaluation function value Eₙ based on the equation (2) for each voxel that is associated with the point cloud data, and calculates an estimated parameters P to maximize the score value E (k) based on the equation (3). Based on the equation (4), the NDT position calculation block 26 determines the NDT position X _{NDT} (k) at time k obtained by applying the estimated parameters P at the time k to the DR position X_{DR} (k) outputted by the dead reconning block 21. The NDT position calculation block 26 outputs the NDT position X _{NDT} (k) as the estimated self position X^ (k) at the time k.

### (3-5) Processing Flow

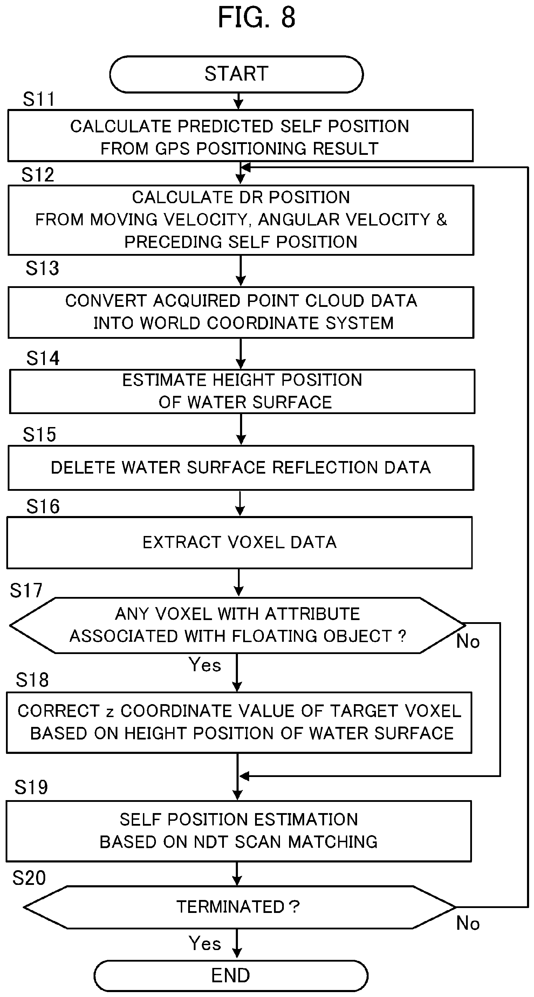

FIG. 8 is an example of a flowchart illustrating a procedure of a self position estimation process that is executed by the self position estimation unit 15 of the information processing device 1. The self position estimation unit 15 starts the process of the flowchart shown in FIG. 8 when it is necessary to perform the self position estimation, such as when the power is turned on.

First, immediately after the start of the self position estimation process, the self position estimation unit 15 calculates the predicted self position from the GNSS positioning result based on the data outputted by the GNSS receiver 5 (step S11).

Next, the self position estimation unit 15 executes dead reckoning from the moving velocity and the angular velocity of the target ship, which are detected on the basis of the velocity sensor 4, the IMU 6, and the like, and the estimated self position at the preceding clock time, and calculates the DR position X_{DR} that is the predicted self position (step S12). Next, the self position estimation unit 15 converts the point cloud data based on the output from the lidar 3 into the point cloud data in the world coordinate system (step S13).

Next, the self position estimation unit 15 estimates the water surface position (i.e., the height position of the water surface) (step S14). In this case, for example, the self position estimation unit 15 extracts the water surface position data from the point cloud data after the transformation into the world coordinate system at step S13. Then, based on the average in the z-direction of the extracted water surface position data, the self position estimation unit 15 estimates the height position of the water surface. In this case, it is noted that the self position estimation unit 15 may collect the water surface position data for a plurality of frames (i.e., water surface position data obtained over the last plural cycles of the scanning by the lidar 3) to thereby estimate the height position of the water surface based on the collected water surface position data. Then, the self position estimation unit 15 determines the water surface reflection data to be the data located below the estimated water surface position and deletes the water surface reflection data from the target point cloud data of the NDT process (step S15).

Next, the self position estimation unit 15 extracts the voxel data VD corresponding to voxels to be used for the NDT scan matching (step S16). In this instance, for example, the self position estimation unit 15 extracts the voxel data VD corresponding to the voxels existing within a predetermined distance (e.g., the measurement distance by the lidar 3) from the DR position in the x-y plane from the map DB 10.

Then, the self position estimation unit 15 determines whether or not there is any voxel with the attribute associated with a floating object (step S17). If there is any voxel with the attribute associated with a floating object (step S17; Yes), the self position estimation unit 15 corrects the z coordinate value on the basis of the height position of the water surface estimated at step S14 for the voxel (step S18). Thus, the self position estimation unit 15 converts the z coordinate value represented as a water surface reference coordinate value into the absolute coordinate value for the voxels with the attribute associated with a floating object.

Then, the self position estimation unit 15 performs the self position estimation by NDT scan matching on the basis of the point cloud data represented in the world coordinate system and the voxel data (including voxel data whose z coordinate value is corrected at step 18) extracted at step S16, wherein the DR position X_{DR} calculated at step S12 is used as the initial value (step S19). Thus, the self position estimation unit 15 calculates the NDT position X _{NDT} to be the estimated self position X^.

Next, the self position estimation unit 15 determines whether or not to terminate the self position estimation process (step S20). If it is determined that the self position estimation process should be terminated (step S20; Yes), the self position estimation unit 15 terminates the process of the flowchart. On the other hand, if it is determined that the self position estimation process should not be terminated (step S20; No), the self position estimation unit 15 gets back to the process at step S12 and estimates the self position at the subsequent clock time using the estimated self position X^ calculated at step S19.

### (4) Modifications

Hereinafter, a description will be given of preferred modifications to the above-described embodiment. The following modifications may be applied to the example embodiment in any combination.

### (First Modification)

In addition to the deletion of the water surface reflection data from the point cloud data, the information processing device 1 may exclude the voxel data VD corresponding to voxels located below the water surface position (in the height direction) from target voxel data VD of association with the point cloud data in the NDT scan matching.

Since the voxels located below the estimated water surface position are under the water, they cannot be used for the self position estimation. In view of the above, in the present modification, the information processing device 1 excludes (i.e., ignores as if they didn't exist) the voxel data VD corresponding to the voxels from the target of association with the point cloud data and calculates the NDT position. Thereby, in associating the point cloud data with the corresponding voxels, the information processing device 1 can eliminate unnecessary process while suitably suppressing the decrease in the position estimation accuracy due to the error of the association.

### (Second Modification)

The data structure of the voxel data VD is not limited to a data structure including a mean vector and a covariance matrix as shown in FIG. 4 or FIG. 6. For example, the voxel data VD may include the point cloud data used in calculating the mean vector and the covariance matrix as it is. Even in this case, the z coordinate value of the point cloud data of each voxel having the attribute associated with a floating object is represented as a water surface reference coordinate value. When referring to the each voxel, the information processing device 1 converts the z coordinate value of the each voxel from the water surface reference coordinate value to the absolute coordinate value, based on the estimated height position of the water surface.

### (Third Modification)

The map data in which the attribute indicative of it being a floating object is to be provided is not limited to voxel data. For example, in the case of map data representing landmark-like features on the water such as a buoy for a water channel sign and a light buoy, feature data provided for each feature instead of voxel data is stored as map data, wherein the feature data indicates position information, shape, and size of the each feature. Such map data may have a data structure that attribute information indicative of it being a floating object is provided in feature data corresponding to a floating object. Thus, the information processing device 1 that refers to the map data can use the z coordinate value of a floating object such as a buoy as a water surface reference coordinate value, and therefore can appropriately perform the conversion to the absolute coordinate value with respect to the z coordinate value of the floating object.

As described above, the data structure of the voxel data VD according to this example is a map data structure which is a data structure of map data to be referred to by an information processing device 1, and includes position information indicating a position of a structural object and attribution information indicating whether or not the structural object is a floating object on a water surface. If the attribute information indicates that the structural object is a floating object on a water surface, the attribute information is used by the information processing device 1 to identify the position of the structural object by using the position information as relative position information relative to a position of the water surface. The voxel data VD is provided with such a data structure, which enables the voxel data VD to store the position information of a floating object in such a manner that the information processing device 1 referring to the voxel data VD can appropriately identify the position of the floating object floating on the water surface without depending on the variation in the tide level.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas.

### DESCRIPTION OF REFERENCE NUMERALS

- 1: Information processing device
- 2: Sensor group
- 3: Lidar
- 4: Speed sensor
- 5: GNSS receiver
- 6: IMU
- 10: Map DB

## Claims

1. A storage device (1, 12) storing map data (10) with a map data structure that is a data structure of the map data to be referred to by an information processing device (1, 13), comprising:
voxel data (VD) for each voxel of structural objects or feature data for each of the structural objects,
the voxel data and the feature data comprising:
position information indicating a position of a structural object; and
attribution information indicating whether or not the structural object is a floating object (9) on a water surface,
wherein the position information includes a height coordinate value (z),
wherein, if the attribution information indicates that the structural object is a floating object on a water surface, the height coordinate value indicated by the position information is a water-surface reference coordinate value representing a relative height with respect to a height position of the water surface, and the attribution information is used by the information processing device to identify the position of the structural object in the height direction by using the height coordinate value as relative position information with respect to a height position of the water surface; and
wherein, if the attribution information indicates that the structural object is not a floating object on the water surface, the height coordinate value indicated by the position information is an absolute coordinate value in a world coordinate system.

2. The storage device according to claim 1,
wherein the position information indicates a relative position whose position in height direction is represented with respect to a height position of the water surface, if the attribution information indicates that the structural object is a floating object on the water surface, and
wherein the attribution information is used by the information processing device to identify an absolute position of the structural object in the height direction obtained by adding an estimated absolute height position of the water surface to the relative height indicated by the position information.

3. The storage device according to claim 1 or 2,
wherein the map data is voxel data representing the position of the structural object for each voxel that is a unit region, and
wherein the position information and the attribution information are provided for each voxel.

4. The storage device according to claim 3,
wherein the position information indicates at least one of
a voxel coordinate value which indicates a representative position of the each voxel and
a mean vector of measured positions of the structural object for the each voxel.

5. The storage device according to claim 3 or 4,
wherein, if the attribution information indicates that the structural object is a floating object on the water surface, the attribution information is used by the information processing device to estimate a self position of the information processing device based on a matching result between
an absolute position of the structural object, for each voxel, obtained by correcting the position information as the relative position information and
an absolute position of the structural object based on measurement data which the information processing device obtains from a measurement device (3).

6. An information processing device comprising:
a map data reference unit configured to refer to map data stored in the storage device according to any one of claims 1 to 5;
a position identification unit configured, if attribution information corresponding to position information of a structural object referred to in the map data indicates that the structural object is a floating object, to identify the position of the structural object in the height direction by using the height coordinate value (z) included in the position information as relative position information with respect to a height position of the water surface.

7. The information processing device according to claim 6, further comprising:
a measurement data acquisition unit configured to acquire measurement data regarding the structural object measured by a measurement device; and
a self position estimation unit configured to estimate a self position based on a matching result between the measurement data and the map data.

8. A control method executed by the information processing device (1, 13) according to any one of claims 6-7, the control method comprising:
referring to map data (10, VD) with the data structure which includes position information indicating a position of a structural object and attribution information indicating whether or not the structural object is a floating object (9) on a water surface,
wherein the data structure comprises voxel data (VD) for each voxel of structural objects or feature data for each of the structural objects; and
if the attribution information corresponding to the position information of the structural object referred to in the map data indicates that the structural object is a floating object, identifying the position of the structural object in the height direction by using the height coordinate value (z) included in the position information as relative position information with respect to a height position of the water surface.

9. A non-transitory computer readable medium storing a program causing a computer (13) to:
perform the control method according to claim 8.

## Patentansprüche

1. Speichervorrichtung (1, 12), die Kartendaten (10) mit einer Kartendatenstruktur speichert, die eine Datenstruktur der Kartendaten ist, auf die durch eine Informationsverarbeitungsvorrichtung (1, 13) Bezug genommen werden soll, aufweisend:
Voxel-Daten (VD) für ein jeweiliges Voxel von Strukturobjekten oder Merkmalsdaten für ein jeweiliges der Strukturobjekte,
wobei die Voxel-Daten und die Merkmalsdaten aufweisen:
eine Positionsinformation, die eine Position eines Strukturobjekts angibt, und
eine Zuordnungsinformation, die angibt, ob das Strukturobjekt ein schwimmendes Objekt (9) an einer Wasseroberfläche ist oder nicht,
wobei die Positionsinformation einen Höhenkoordinatenwert (z) aufweist,
wobei, wenn die Zuordnungsinformation angibt, dass das Strukturobjekt ein schwimmendes Objekt an einer Wasseroberfläche ist, der Höhenkoordinatenwert, der durch die Positionsinformation angegeben wird, ein Wasseroberfläche-Referenzkoordinatenwert ist, der eine relative Höhe in Bezug auf eine Höhenposition der Wasseroberfläche darstellt, und die Zuordnungsinformation von der Informationsverarbeitungsvorrichtung verwendet wird, um die Position des Strukturobjekts in der Höhenrichtung unter Verwendung des Höhenkoordinatenwerts als eine Relativpositionsinformation in Bezug auf eine Höhenposition der Wasseroberfläche zu identifizieren, und
wobei, wenn die Zuordnungsinformation angibt, dass das Strukturobjekt kein schwimmendes Objekt an der Wasseroberfläche ist, der Höhenkoordinatenwert, der durch die Positionsinformation angegeben wird, ein absoluter Koordinatenwert in einem Weltkoordinatensystem ist.

2. Speichervorrichtung nach Anspruch 1,
wobei die Positionsinformation eine relative Position angibt, deren Position in Höhenrichtung in Bezug auf eine Höhenposition der Wasseroberfläche dargestellt ist, wenn die Zuordnungsinformation angibt, dass das Strukturobjekt ein schwimmendes Objekt an der Wasseroberfläche ist, und
wobei die Zuordnungsinformation von der Informationsverarbeitungsvorrichtung verwendet wird, um eine absolute Position des Strukturobjekts in der Höhenrichtung zu ermitteln, die durch Addieren einer geschätzten absoluten Höhenposition der Wasseroberfläche zu der relativen Höhe erhalten wird, die durch die Positionsinformation angegeben wird.

3. Speichervorrichtung nach Anspruch 1 oder 2,
wobei die Kartendaten Voxel-Daten sind, die die Position des Strukturobjekts für ein jeweiliges Voxel darstellen, das ein Einheitsbereich ist, und
wobei die Positionsinformation und die Zuordnungsinformation für ein jeweiliges Voxel bereitgestellt sind.

4. Speichervorrichtung nach Anspruch 3,
wobei die Positionsinformation zumindest eines angibt von:
einem Voxel-Koordinatenwert, welcher eine repräsentative Position des jeweiligen Voxels angibt, und
einem mittleren Vektor gemessener Positionen des Strukturobjekts für das jeweilige Voxel.

5. Speichervorrichtung nach Anspruch 3 oder 4,
wobei, wenn die Zuordnungsinformation angibt, dass das Strukturobjekt ein schwimmendes Objekt an der Wasseroberfläche ist, die Zuordnungsinformation von der Informationsverarbeitungsvorrichtung verwendet wird, um eine Eigenposition der Informationsverarbeitungsvorrichtung zu schätzen, basierend auf einem Abgleichergebnis zwischen
einer absoluten Position des Strukturobjekts für ein jeweiliges Voxel, die durch Anpassung der Positionsinformation als die Relativpositionsinformation erhalten wird, und
einer absoluten Position des Strukturobjekts basierend auf Messdaten, welche die Informationsverarbeitungsvorrichtung von einer Messvorrichtung (3) erhält.

6. Informationsverarbeitungsvorrichtung, aufweisend:
eine Kartendaten-Bezugnahmeeinheit, die derart konfiguriert ist, dass sie auf Kartendaten Bezug nimmt, die in der Speichervorrichtung nach einem der Ansprüche 1 bis 5 gespeichert sind,
eine Positionsidentifizierungseinheit, die derart konfiguriert ist, dass sie, wenn eine Zuordnungsinformation, die mit einer Positionsinformation eines Strukturobjekts korrespondiert, auf die in den Kartendaten Bezug genommen wird, angibt, dass das Strukturobjekt ein schwimmendes Objekt ist, die Position des Strukturobjekts in der Höhenrichtung unter Verwendung des Höhenkoordinatenwerts (z) identifiziert, der in der Positionsinformation als eine Relativpositionsinformation in Bezug auf eine Höhenposition der Wasseroberfläche enthalten ist.

7. Informationsverarbeitungsvorrichtung nach Anspruch 6, ferner aufweisend:
eine Messdatenerfassungseinheit, die derart konfiguriert ist, dass sie Messdaten in Bezug auf das Strukturobjekt erfasst, die von einer Messvorrichtung gemessen werden, und
eine Eigenpositionsschätzungseinheit, die derart konfiguriert ist, dass sie eine Eigenposition basierend auf einem Abgleichergebnis zwischen den Messdaten und den Kartendaten schätzt.

8. Steuerungsverfahren, das durch die Informationsverarbeitungsvorrichtung (1, 13) nach einem der Ansprüche 6-7 ausgeführt wird, wobei das Steuerungsverfahren aufweist:
Bezugnahme auf Kartendaten (10, VD) mit der Datenstruktur, die aufweist: eine Positionsinformation, die eine Position eines Strukturobjekts angibt, und eine Zuordnungsinformation, die angibt, ob das Strukturobjekt ein schwimmendes Objekt (9) an einer Wasseroberfläche ist oder nicht,
wobei die Datenstruktur Voxel-Daten (VD) für ein jeweiliges Voxel von Strukturobjekten oder Merkmalsdaten für ein jeweiliges der Strukturobjekte aufweist, und
wenn die Zuordnungsinformation, die mit der Positionsinformation des Strukturobjekts korrespondiert, auf die in den Kartendaten Bezug genommen wird, angibt, dass das Strukturobjekt ein schwimmendes Objekt ist, Identifizieren der Position des Strukturobjekts in der Höhenrichtung unter Verwendung des Höhenkoordinatenwerts (z), der in der Positionsinformation als eine Relativpositionsinformation in Bezug auf eine Höhenposition der Wasseroberfläche enthalten ist.

9. Nichtflüchtiges computerlesbares Medium, das ein Programm speichert, das einen Computer (13) dazu veranlasst, das Steuerungsverfahren nach Anspruch 8 auszuführen.

## Revendications

1. Dispositif de stockage (1, 12) stockant des données cartographiques (10) avec une structure de données cartographiques qui est une structure de données des données cartographiques auxquelles un dispositif de traitement d'information (1, 13) doit se référer, comprenant :
des données de voxel (VD) pour chaque voxel d'objets structurels ou des données de caractéristiques pour chacun des objets structurels,
les données de voxel et les données de caractéristiques comprenant :
une information de position indiquant une position d'un objet structurel ; et
une information d'attribution indiquant si l'objet structurel est ou non un objet flottant (9) à une surface d'eau,
dans lequel l'information de position comprend une valeur de coordonnée de hauteur (z),
dans lequel, si l'information d'attribution indique que l'objet structurel est un objet flottant à une surface d'eau, la valeur de coordonnée de hauteur indiquée par l'information de position est une valeur de coordonnée de référence de surface d'eau représentant une hauteur relative par rapport à une position en hauteur de la surface d'eau, et l'information d'attribution est utilisée par le dispositif de traitement d'information pour identifier la position de l'objet structurel dans la direction de la hauteur en utilisant la valeur de coordonnée de hauteur comme information de position relative par rapport à une position en hauteur de la surface d'eau ; et
dans lequel, si l'information d'attribution indique que l'objet structurel n'est pas un objet flottant à la surface d'eau, la valeur de coordonnée de hauteur indiquée par l'information de position est une valeur de coordonnée absolue dans un système de coordonnées mondial.

2. Dispositif de stockage selon la revendication 1,
dans lequel l'information de position indique une position relative dont la position dans la direction de hauteur est représentée par rapport à une position en hauteur de la surface d'eau, si l'information d'attribution indique que l'objet structurel est un objet flottant à la surface d'eau, et
dans lequel l'information d'attribution est utilisée par le dispositif de traitement d'information pour identifier une position absolue de l'objet structurel dans la direction de la hauteur, obtenue en ajoutant une position en hauteur absolue estimée de la surface d'eau à la hauteur relative indiquée par l'information de position.

3. Dispositif de stockage selon la revendication 1 ou 2,
dans lequel les données cartographiques sont des données de voxel représentant la position de l'objet structurel pour chaque voxel qui est une région unitaire, et
dans lequel l'information de position et l'information d'attribution sont fournies pour chaque voxel.

4. Dispositif de stockage selon la revendication 3,
dans lequel l'information de position indique au moins l'un parmi :
une valeur de coordonnée de voxel qui indique une position représentative de chaque voxel et
un vecteur moyen de positions mesurées de l'objet structurel pour chaque voxel.

5. Dispositif de stockage selon la revendication 3 ou 4,
dans lequel, si l'information d'attribution indique que l'objet structurel est un objet flottant à la surface d'eau, l'information d'attribution est utilisée par le dispositif de traitement d'information pour estimer une position propre du dispositif de traitement d'information sur la base d'un résultat de correspondance entre
une position absolue de l'objet structurel, pour chaque voxel, obtenue en corrigeant l'information de position en tant qu'information de position relative, et
une position absolue de l'objet structurel sur la base de données de mesure que le dispositif de traitement d'information obtient à partir d'un dispositif de mesure (3).

6. Dispositif de traitement d'information, comprenant :
une unité de référence de données cartographiques configurée pour se référer à des données cartographiques stockées dans le dispositif de stockage selon l'une quelconque des revendications 1 à 5 ;
une unité d'identification de position configurée, si une information d'attribution correspondant à une information de position d'un objet structurel référencée dans les données cartographiques indique que l'objet structurel est un objet flottant, pour identifier la position de l'objet structurel dans la direction de la hauteur en utilisant la valeur de coordonnée de hauteur (z) incluse dans l'information de position comme information de position relative par rapport à une position en hauteur de la surface d'eau.

7. Dispositif de traitement d'information selon la revendication 6, comprenant en outre :
une unité d'acquisition de données de mesure configurée pour acquérir des données de mesure concernant l'objet structurel mesurées par un dispositif de mesure ; et
une unité d'estimation de position propre configurée pour estimer une position propre sur la base d'un résultat de correspondance entre les données de mesure et les données cartographiques.

8. Procédé de commande exécuté par le dispositif de traitement d'information (1, 13) selon l'une quelconque des revendications 6 à 7, le procédé de commande comprenant :
la référence à des données cartographiques (10, VD) avec la structure de données qui comprend une information de position indiquant une position d'un objet structurel et une information d'attribution indiquant si l'objet structurel est ou non un objet flottant (9) à une surface d'eau,
dans lequel la structure de données comprend des données de voxel (VD) pour chaque voxel d'objets structurels ou des données de caractéristiques pour chacun des objets structurels ; et
si l'information d'attribution correspondant à l'information de position de l'objet structurel référencée dans les données cartographiques indique que l'objet structurel est un objet flottant, l'identification de la position de l'objet structurel dans la direction de la hauteur en utilisant la valeur de coordonnée de hauteur (z) incluse dans l'information de position comme information de position relative par rapport à une position en hauteur de la surface d'eau.

9. Support non transitoire lisible par ordinateur stockant un programme amenant un ordinateur (13) à :
exécuter le procédé de commande selon la revendication 8.
